# FASCICULE DE BREVET EUROPEEN

(11) **EP 3 135 558 B1**
(45) Date de publication et mention de la délivrance du brevet: **18.04.2018**
(21) Numéro de dépôt: 16182568.2
(22) Date de dépôt: 03.08.2016
(51) Int. Cl.: B62D 1/20, B60R 13/02, B62D 1/16

(54) **CACHE DE PROTECTION DE LA PARTIE INFERIEURE DE LA COLONNE DE DIRECTION D'UN VEHICULE**
SCHUTZABDECKUNG DES UNTEREN TEILS DER LENKSÄULE EINES FAHRZEUGS
COVER FOR PROTECTING THE LOWER PORTION OF THE STEERING COLUMN OF A VEHICLE

(30) Priorité: 28.08.2015 FR 1557991
(43) Date de publication de la demande: 01.03.2017
(73) Titulaire: PSA Automobiles SA, 78300 Poissy (FR)
(72) Inventeur: RICHARD, Olivier, 68130 WITTERSDORF (FR)

(56) Documents cités:
- EP-A1- 0 548 943
- DE-A1-102014 002 093
- JP-A- 2011 046 264

## Description

L'invention porte sur un cache de protection de la partie inférieure de la colonne de direction d'un véhicule. Elle porte également sur un véhicule, en particulier un véhicule automobile, équipé d'un tel cache de protection.

La colonne de direction d'un véhicule, en particulier d'un véhicule automobile, actionne, lorsque le volant est tourné par le conducteur du véhicule, la crémaillère de direction, ou boîte de direction, laquelle agit sur les roulements de roue et fait tourner les roues du véhicule. Cet actionnement de la boîte de direction est réalisé par l'intermédiaire d'un joint, de type joint de cardan par exemple, monté à la partie inférieure de la colonne de direction.

De façon classique, le plancher et le tapis de plancher avant d'un véhicule automobile sont découpés dans la zone de passage de la colonne de direction, afin de pouvoir réaliser le montage du joint de cardan à l'extrémité inférieure de la colonne, ce qui a pour conséquence la formation d'une partie en creux ou « cuvette » dans le plancher du véhicule, à l'intérieur de laquelle peut tomber de la boue ou de la terre, par exemple, et la présence de cette matière infiltrée peut aller jusqu'à provoquer un blocage du joint de cardan gravement préjudiciable à la direction du véhicule, par conséquent à la sécurité du conducteur et des passagers du véhicule.

On connaît, selon le document CN 203713953 U, un protecteur ou capot anti-poussière de colonne de direction de véhicule automobile. La structure du corps principal de ce capot anti-poussière se présente sensiblement sous la forme d'un demi cylindre, qui comporte une embouchure inférieure plane inclinée combinée avec la surface supérieure d'une partie en tôle d'une paroi avant de la caisse du véhicule, un bord en extension, qui s'étend vers l'extérieur et qui est disposé sur la périphérie du demi cylindre, et une targette, qui est formée dans le bord en extension par l'intermédiaire d'un trou. Cette structure permet une installation du capot anti-poussière à l'équerre du plancher et du tablier du véhicule.

On connaît également, selon le document JP 2008062793, un capot protecteur permettant d'éviter les infiltrations sous le plancher d'un véhicule automobile. Le véhicule comporte une caisse, une installation de commande située dans une partie avant de la caisse, et un revêtement de planche de bord destiné à recouvrir la planche de bord à l'intérieur de la caisse. La plaque de plancher est placée sur le côté du revêtement de planche de bord et un tapis de sol est collé sur la plaque de plancher. Le revêtement de planche de bord est intégralement moulé avec une partie de support de revêtement, qui fait saillie vers la plaque de plancher et qui est située à une hauteur suffisante pour être alignée avec la surface supérieure de la plaque de plancher. Le tapis de sol est disposé sur la plaque de plancher et la partie de support de revêtement du revêtement de planche de bord.

On connaît également selon le document EP0548943 A1 l'ensemble des caractéristiques du préambule de la revendication 1.

Le but de la présente invention est de fournir un cache de protection de la partie inférieure de la colonne de direction d'un véhicule, qui soit de conception, de réalisation et de montage simples, sans outil particulier, qui soit esthétique, robuste, fiable et économique.

Pour parvenir à ce but, la présente invention a pour objet un cache de protection de la partie inférieure de la colonne de direction d'un véhicule, destiné à éviter les infiltrations de matière dans l'ouverture en forme de cuvette du plancher et du tapis de plancher avant du véhicule pour le passage de la colonne de direction, et ce cache de protection, nouveau, comprend un corps principal, qui comporte une paroi tubulaire de forme sensiblement semi cylindrique et une base raccordée à la partie inférieure de la paroi tubulaire, ledit corps principal étant destiné à recouvrir en partie ladite ouverture en forme de cuvette et à masquer la partie inférieure de la colonne de direction, des moyens de positionnement du cache de protection sur le tapis de plancher avant du véhicule et des éléments d'assemblage dudit cache de protection sur ledit tapis de plancher avant du véhicule.

Selon un mode de réalisation préféré de l'invention, lesdits moyens de positionnement du cache de protection sur le tapis de plancher avant du véhicule comprennent, d'une part, une patte de positionnement, en forme d'équerre, reliée à la partie inférieure et sensiblement centrale du corps principal du cache de protection et faisant saillie vers le bas dudit corps principal, le tronçon d'extrémité libre de ladite patte de positionnement étant destiné à être glissé sous le tapis de plancher avant du véhicule et, d'autre part, une collerette sensiblement semi circulaire, en saillie externe du bord externe de la base plane du corps principal du cache, ladite collerette étant destinée à être insérée sur le tapis de plancher avant du véhicule sur une partie du pourtour de ladite ouverture en forme de cuvette.

Selon un mode de réalisation préféré de l'invention également, lesdits éléments d'assemblage du cache de protection sur le tapis de plancher avant du véhicule comportent, d'une part, deux flancs latéraux, sensiblement plans et rectangulaires, qui prolongent radialement la paroi tubulaire du corps principal et, d'autre part, des écrous ou des vis cages qui sont portés par ces flancs latéraux et destinés à être positionnés en face de trous correspondants du tapis de plancher avant du véhicule.

De manière préférentielle, les écrous ou vis cages sont au nombre de deux, à savoir un écrou ou vis cage sur chacun des deux flancs latéraux.

Avantageusement, le cache de protection selon l'invention peut être réalisé par un procédé de moulage, en matière plastique, par exemple en polypropylène isostatique.

De manière avantageuse également, des nervures de renforcement peuvent être prévues sur les surfaces des flancs latéraux et de la patte de positionnement, qui, lorsque le cache de protection est en position montée, sont dirigées vers l'avant du véhicule et, par conséquent, sur les surfaces desdits flancs latéraux et de la patte de positionnement dirigées face à la cuvette du plancher du véhicule.

La présente invention a aussi pour objet un véhicule, en particulier un véhicule automobile, qui comporte un cache de protection de la partie inférieure de sa colonne de direction et ce cache de protection est conforme à celui décrit ci-dessus dans ses grandes lignes.

D'autres buts, avantages et caractéristiques de l'invention apparaîtront dans la description qui suit d'un exemple de réalisation, non limitatif de l'objet et de la portée de la présente demande de brevet, accompagnée de dessins dans lesquels :
- la figure 1 est une vue en perspective, schématique, de la partie de plancher avant d'un véhicule automobile, qui comporte l'ouverture en forme de cuvette du plancher et du tapis de plancher avant du véhicule pour le passage de la partie inférieure de colonne de direction du véhicule,
- la figure 2 est une vue en perspective, schématique, d'un exemple de réalisation du cache de protection selon la présente invention permettant de protéger la partie inférieure de la colonne de direction d'un véhicule, le cache de protection selon l'invention étant monté sur le tapis de plancher avant du véhicule,
- la figure 3 est une vue en perspective du cache de protection selon l'invention, représenté seul,
- la figure 4 est une vue en coupe, schématique, du cache de protection des figures 2 et 3 en position monté sur le plancher et le tapis de plancher du véhicule,
- la figure 5 est une vue en perspective, schématique, du cache de protection des figures 2 à 4, montrant les orifices du tapis de plancher du véhicule destinés au passage des éléments d'assemblage du cache de protection sur le tapis du véhicule, et
- la figure 6 est une vue en coupe illustrant le passage d'une vis cage d'assemblage du cache de protection selon l'invention sur le tapis de plancher du véhicule.

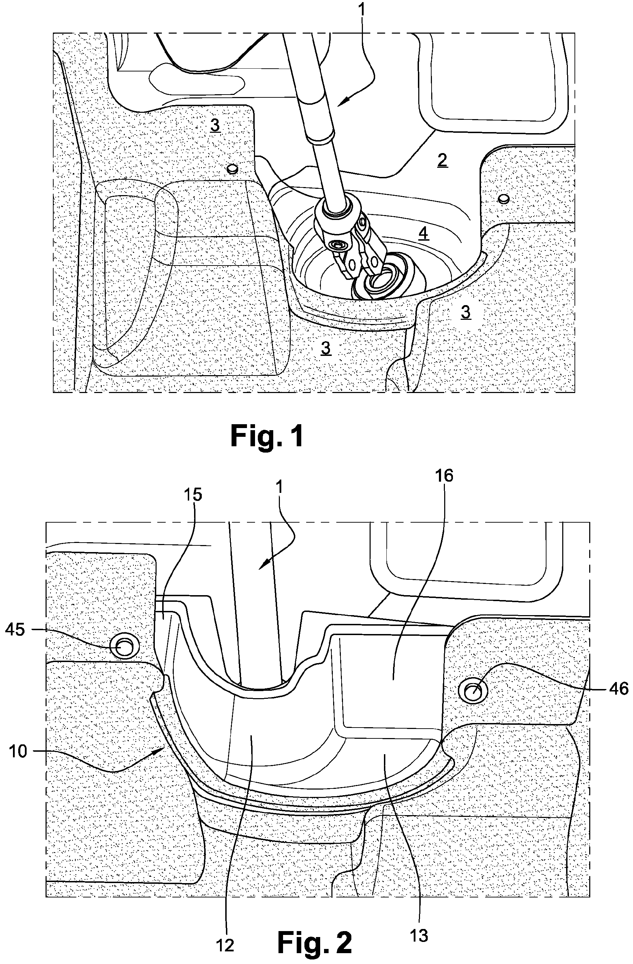

En référence au dessin de la figure 1, on a représenté la partie inférieure d'une colonne de direction, de référence générale 1, de véhicule automobile, en position avant montage d'un joint de cardan à son extrémité pour actionner la crémaillère de direction du véhicule, comme mentionné précédemment dans le présent texte.

Comme déjà mentionné également, de façon classique, le plancher avant 2 et le tapis de plancher avant 3 avant du véhicule sont découpés dans la zone de passage de la partie inférieure de la colonne de direction 1, afin de pouvoir réaliser le montage du joint de cardan (non représenté en position montée) situé à l'extrémité inférieure de la colonne 1, ce qui a pour conséquence la formation d'une cuvette 4 dans le plancher avant 2 et le tapis de plancher avant 3 du véhicule, à l'intérieur de laquelle peut tomber de la terre, par exemple, et la présence de cette dernière peut aller jusqu'à provoquer un blocage du joint de cardan gravement préjudiciable au mécanisme de direction du véhicule.

Selon le principe même de la présente invention et en référence, notamment, aux dessins des figures 2 à 5, il est prévu un cache de protection, de référence générale 10, qui a pour fonction de protéger la partie inférieure de la colonne de direction 1 du véhicule. La forme et la position de ce cache de protection 10 permettent d'éviter les infiltrations de matière, boue, terre ou autre, dans l'ouverture en forme de cuvette 4 du plancher avant 2 et du tapis de plancher avant 3 du véhicule.

Pour parvenir à ce résultat, le cache de protection 10 selon la présente invention comprend un corps principal, lequel comporte une paroi tubulaire 12, qui est de forme sensiblement semi cylindrique ou semi tronconique, et une base plane 13, qui est raccordée à la partie inférieure de la paroi tubulaire 12 et est sensiblement perpendiculaire à l'axe de ladite paroi tubulaire 12. La base plane 13 est destinée à recouvrir en partie l'ouverture mentionnée précédemment en forme de cuvette 4, tandis que la paroi tubulaire 12 est destinée à masquer la partie inférieure de la colonne de direction 1. Le cache de protection 10 selon la présente invention comporte également des moyens permettant son positionnement sur le tapis de plancher avant 3 du véhicule, et des éléments d'assemblage permettant son assemblage et sa fixation ultérieure sur ledit tapis de plancher avant 3 du véhicule.

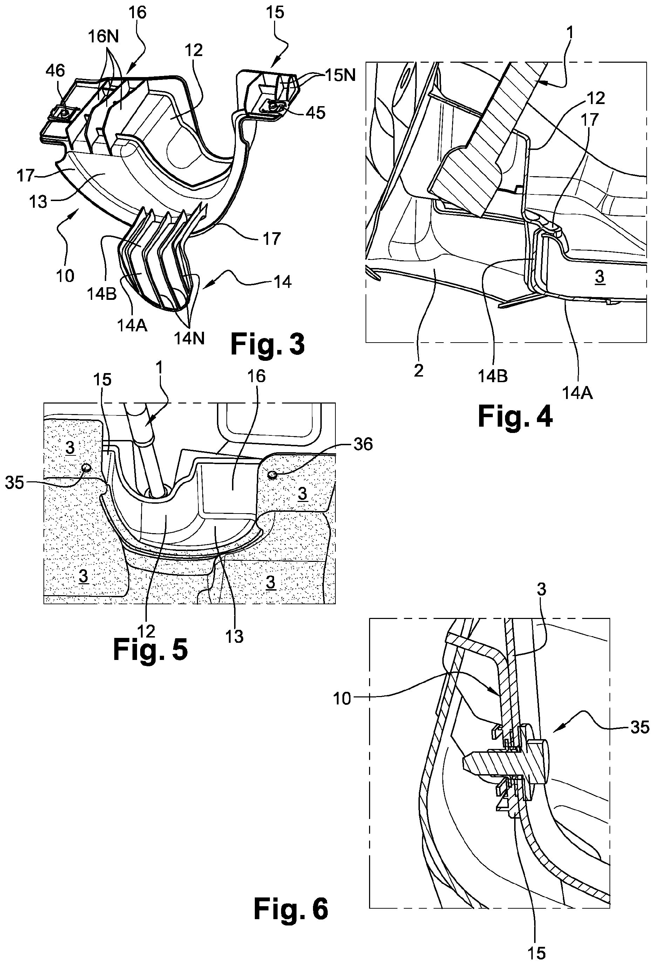

Les moyens de positionnement du cache de protection 10 sur le tapis de plancher avant 3 du véhicule sont représentés sur les dessins des figures 3 et 4. Ils comprennent une patte de positionnement, de référence générale 14, en forme générale d'équerre, qui est reliée à la partie centrale inférieure du corps principal du cache de protection et qui fait saillie vers le bas dudit corps principal. Cette patte de positionnement 14 en forme d'équerre comporte un premier tronçon 14B sensiblement parallèle à la paroi tubulaire 12, rigidement fixé sur la base plane 13, et un second tronçon, dit tronçon d'extrémité libre 14A, en prolongement et perpendiculaire au premier tronçon 14B. Ce second tronçon d'extrémité libre 14A de la patte de positionnement 14 est destiné à être glissé sous le tapis de plancher avant 3, comme représenté sur le dessin de la figure 4. Les moyens de positionnement du cache de protection 10 sur le tapis de plancher avant 3 du véhicule comprennent également une collerette 17, sensiblement semi circulaire, qui est en saillie externe du bord externe de la base plane 13 du corps principal du cache de protection et qui est destinée à être insérée sur le tapis de plancher avant 3 du véhicule sur une partie du pourtour de ladite ouverture en forme de cuvette 4, comme montré également sur le dessin de la figure 4.

Les éléments d'assemblage et de fixation du cache de protection 10 sur le tapis de plancher avant 3 du véhicule comportent, d'une part, deux flancs latéraux, référencés 15 et 16, respectivement, et représentés dur les dessins des figures 2, 3 et 5. Ces flancs latéraux 15 et 16 prolongent radialement la paroi tubulaire 12 du corps principal. Les éléments d'assemblage comprennent aussi deux vis cages (figures 2 et 3), qui sont désignés par les références numériques 45 et 46 et qui sont portés par ces flancs latéraux 15 et 16, respectivement. Ces vis cages 45 et 46, qui pourraient être aussi des écrous cages, sont destinés à être positionnés en face de trous correspondants du tapis de plancher avant 3 du véhicule, à savoir les trous 35 et 36, respectivement (figure 5).

Les vis cages ou écrous cages sont des éléments d'assemblage, connus en soi, ne nécessitant aucun outillage spécifique, qui sont composés d'au moins deux parties solidaires entre elles, à savoir un écrou ou la vis assurant la fonction s'assemblage, et une cage, qui se « clippe », pré positionne l'écrou et empêche la rotation de l'écrou pendant le serrage de la vis.

En référence au dessin de la figure 6, on a représenté le tapis de plancher avant 3 du véhicule pincé entre la tête de la vis cage 35, par exemple, et le cache de protection 10 selon l'invention, plus précisément entre ladite tête de vis et le flanc latéral 15 du cache de protection 10.

Le cache de protection 10 peut être réalisé « monobloc » par moulage, par exemple, d'une matière plastique, la matière plastique employée pouvant être, à titre d'exemple non limitatif de l'objet et de la portée de la présente invention, le polypropylène isostatique.

Comme représenté sur le dessin de la figure 3, il peut être prévu des nervures de renforcement, référencées collectivement 15N, sur le flanc latéral 15, des nervures de renforcement, référencées collectivement 16N, sur le flanc latéral 16, et des nervures de renforcement, référencées collectivement 14N, sur la patte de positionnement 14. Ces nervures de renforcement 15N, 16N, 14N, sont en saillie respectivement des surfaces des flancs latéraux 15, 16 et de la patte de positionnement 14, qui sont dirigées vers l'avant du véhicule lorsque le cache de protection est en position montée. Toutes ces nervures sont, par conséquent, en saillie des surfaces du cache de protection qui font face à l'ouverture en forme de cuvette 4 du plancher 2 et du tapis de plancher avant 3 du véhicule.

Le montage du cache de protection 10 selon la présente invention s'effectue de la manière suivante :
- on fait passer le tronçon d'extrémité libre 14A de la patte de positionnement 14 sous le tapis de plancher avant 3 (figure 4),
- on s'assure ensuite que la collerette 17 est bien au dessus du tapis de plancher avant 3 (figure 3 également),
- on positionne les vis ou écrous cage 45 et 46 en face des trous 35, respectivement 36 (figure 5), et
- on procède au vissage, le tapis de plancher 3 étant alors pincé, comme représenté sur le dessin de la figure 6, entre les têtes de vis et le cache de protection 10.

Le cache de protection de partie inférieure de colonne de direction de véhicule tel que décrit ci-dessus présente l'avantage d'être de montage très facile, ne nécessitant aucun outil.

## Revendications

1. Cache de protection de la partie inférieure de la colonne de direction d'un véhicule, destiné à éviter les infiltrations de matière dans l'ouverture en forme de cuvette (4) du plancher (2) et du tapis de plancher (3) avant du véhicule pour le passage de la colonne de direction (1), comprenant un corps principal, qui comporte une paroi tubulaire (12) de forme sensiblement semi cylindrique et des moyens de positionnement du cache de protection (10) sur le tapis de plancher avant (3) du véhicule et des éléments d'assemblage dudit cache de protection (10) sur ledit tapis de plancher avant (3) du véhicule, **caractérisé en ce qu'**il comprend une base sensiblement plane (13) raccordée à la partie inférieure de la paroi tubulaire (12), destiné à recouvrir en partie ladite ouverture en forme de cuvette (4) et à masquer la partie inférieure de la colonne de direction (1).

2. Cache de protection selon la revendication 1, **caractérisé en ce que** lesdits moyens de positionnement du cache de protection (10) sur le tapis de plancher avant (3) du véhicule comprennent, d'une part, une patte de positionnement (14), en forme d'équerre, reliée à la partie inférieure et sensiblement centrale du corps principal du cache de protection et faisant saillie vers le bas dudit corps principal, le tronçon d'extrémité libre (14A) de ladite patte de positionnement (14) étant destiné à être glissé sous le tapis de plancher (3) avant et, d'autre part, une collerette (17) sensiblement semi circulaire, en saillie externe du bord externe de la base plane (13) du corps principal du cache, ladite collerette (17) étant destinée à être insérée sur le tapis de plancher (3) avant du véhicule sur une partie du pourtour de ladite ouverture en forme de cuvette (4).

3. Cache de protection selon l'une quelconque des revendications 1 et 2, **caractérisé en ce que** lesdits éléments d'assemblage du cache de protection (10) sur le tapis de plancher avant (3) du véhicule comportent, d'une part, deux flancs latéraux (15, 16) qui prolongent radialement la paroi tubulaire (12) du corps principal et, d'autre part, des vis cages (45, 46) qui sont portées par ces flancs latéraux (15, 16) et destinées à être positionnées en face de trous (35, 36) correspondants du tapis de plancher avant (3) du véhicule.

4. Cache de protection selon la revendication 3, caractérisé ce que les vis cages (45, 46) sont au nombre de deux, à savoir une vis cage sur chacun des deux flancs latéraux (15, 16).

5. Cache de protection selon l'une quelconque des revendications 1 à 4, **caractérisé en ce qu'**il est réalisé en matière plastique.

6. Cache de protection selon la revendication 5, **caractérisé en ce que** la matière plastique est le polypropylène isostatique.

7. Cache de protection selon l'une quelconque des revendications 5 et 6, **caractérisé en ce qu'**il est réalisé « monobloc » et par moulage.

8. Cache de protection selon l'une quelconque des revendications 1 à 7, **caractérisé en ce que** des nervures de renforcement (15N, 16N, 14N) peuvent être prévues sur les surfaces des flancs latéraux (15, 16) et de la patte de positionnement (14) qui, lorsque le cache de protection (10) est en position montée sur le véhicule, font saillie de la surface du cache de protection qui est dirigée vers l'avant du véhicule.

9. Véhicule, en particulier véhicule automobile, **caractérisé en ce qu'**il comporte un cache de protection (10) de la partie inférieure de sa colonne de direction (1) qui est conforme à l'une quelconque des revendications précédentes.

## Patentansprüche

1. Schutzabdeckung des unteren Teils der Lenksäule eines Fahrzeugs, die dazu bestimmt ist, das Eindringen von Stoffen in die Öffnung in Schalenform (4) des Bodens (2) und der vorderen Bodenmatte (3) des Fahrzeugs für das Durchgehen der Lenksäule (1) zu verhindern, die einen Hauptkörper umfasst, der eine röhrenförmige Wand (12) mit im Wesentlichen halbzylindrischer Form umfasst, Positionierungsmittel der Schutzabdeckung (10) auf der vorderen Bodenmatte (3) des Fahrzeugs und Zusammenfügeelemente der Schutzabdeckung (10) auf der vorderen Bodenmatte (3) des Fahrzeugs, **dadurch gekennzeichnet, dass** sie eine im Wesentlichen flache Basis (13) umfasst, die an den unteren Teil der röhrenförmigen Wand (12), der dazu bestimmt ist, die Öffnung in Schalenform (4) zum Teil abzudecken und den unteren Teil der Lenksäule (1) zu verbergen, angeschlossen ist.

2. Schutzabdeckung nach Anspruch 1, **dadurch gekennzeichnet, dass** die Positionierungsmittel der Schutzabdeckung (10) auf der Bodenmatte (3) des Fahrzeugs einerseits eine Positionierungspratze (14) in Winkelform umfassen, die mit dem unteren Teil verbunden und im Wesentlichen zu dem Hauptkörper der Schutzabdeckung zentral ist und zu der Unterseite des Hauptkörpers vorsteht, wobei der freie Endabschnitt (14A) der Positionierungspratze (14) dazu bestimmt ist, unter die vordere Bodenmatte (3) geschoben zu werden, und andererseits einen im Wesentlichen halbkreisförmigen Kragen (17), außen von dem Außenrand der flachen Basis (13) des Hauptkörpers der Abdeckung vorstehend, wobei der Kragen (17) dazu bestimmt ist, auf der vorderen Bodenmatte (3) des Fahrzeugs auf einem Teil des Umfangs der Öffnung in Schalenform (4) eingefügt zu sein.

3. Schutzabdeckung nach einem der Ansprüche 1 und 2, **dadurch gekennzeichnet, dass** die Zusammenfügeelemente der Schutzabdeckung (10) auf der vorderen Bodenmatte (3) des Fahrzeugs einerseits zwei seitliche Flanken (15, 16) umfassen, die die röhrenförmige Wand (12) des Hauptkörpers radial verlängern, und andererseits Käfigschrauben (45, 46), die von diesen seitlichen Flanken (15, 16) getragen werden und dazu bestimmt sind, gegenüber entsprechender Bohrungen (35, 36) der vorderen Bodenmatte (3) des Fahrzeugs positioniert zu sein.

4. Schutzabdeckung nach Anspruch 3, **dadurch gekennzeichnet, dass** es zwei Käfigschrauben (45, 46) gibt, nämlich eine Käfigschraube auf jeder der zwei seitlichen Flanken (15, 16).

5. Schutzabdeckung nach einem der Ansprüche 1 bis 4, **dadurch gekennzeichnet, dass** sie aus einem Kunststoff hergestellt ist.

6. Schutzabdeckung nach Anspruch 5, **dadurch gekennzeichnet, dass** der Kunststoff isostatisches Polypropylen ist.

7. Schutzabdeckung nach einem der Ansprüche 5 und 6, **dadurch gekennzeichnet, dass** sie "einstückig" und durch Formen hergestellt ist.

8. Schutzabdeckung nach einem der Ansprüche 1 bis 7, **dadurch gekennzeichnet, dass** Verstärkungsrippen (15N, 16N, 14N) auf den Oberflächen der seitlichen Flanken (15, 16) und der Positionierungspratze (14) vorgesehen sein können, die, wenn die Schutzabdeckung (10) in auf dem Fahrzeug montierter Position ist, von der Oberfläche der Schutzabdeckung, die zu der Vorderseite des Fahrzeugs gerichtet ist, vorstehen.

9. Fahrzeug, insbesondere Kraftfahrzeug, **dadurch gekennzeichnet, dass** es eine Schutzabdeckung (10) des unteren Teils seiner Lenksäule (1) umfasst, die einem der vorhergehenden Ansprüche entspricht.

## Claims

1. A cover for protecting the lower portion of the steering column of a vehicle, intended to prevent infiltrations of material in the opening in the form of a dish (4) of the floor (2) and of the front floor mat (3) of the vehicle for the passage of the steering column (1), including a principal body, which comprises a tubular wall (12) of substantially semicylindrical shape, and positioning means of the protective cover (10) on the front floor mat (3) of the vehicle, and assembly elements of said protective cover (10) on said front floor mat (3) of the vehicle, **characterized in that** it includes a substantially flat base (13) connected to the lower part of the tubular wall (12), intended to partially cover said dish-shaped opening (4) and to conceal the lower part of the steering column (1).

2. The protective cover according to Claim 1, **characterized in that** said positioning means of the protective cover (10) on the front floor mat (3) of the vehicle include, on the one hand, an L-shaped positioning lug (14), connected to the lower and substantially central part of the principal body of the protective cover and projecting downwards from said principal body, the free end portion (14A) of said positioning lug (14) being intended to be slid beneath the front floor mat (3) and, on the other hand, a substantially semi-circular collar (17), projecting externally from the external edge of the flat base (13) of the principle body of the cover, said collar (17) being intended to be inserted on the front floor mat (3) of the vehicle over a portion of the periphery of said dish-shaped opening (4).

3. The protective cover according to any one of Claims 1 and 2, **characterized in that** said assembly elements of the protective cover (10) on the front floor mat (3) of the vehicle comprise, on the one hand, two lateral flanks (15, 16) which extend radially the tubular wall (12) of the principal body and, on the other hand, screw cages (45, 46) which are carried by these lateral flanks (15, 16) and intended to be positioned facing corresponding holes (35, 36) of the front floor mat (3) of the vehicle.

4. The protective cover according to Claim 3, **characterized in that** the screw cages (45, 46) are two in number, namely one screw cage on each of the two lateral flanks (15, 16).

5. The protective cover according to any one of Claims 1 to 4, **characterized in that** it is made from plastic material.

6. The protective cover according to Claim 5, **characterized in that** the plastic material is isostatic polypropylene.

7. The protective cover according to any one of Claims 5 and 6, **characterized in that** it is made in a "one-piece" manner and by moulding.

8. The protective cover according to any one of Claims 1 to 7, **characterized in that** reinforcement ribs (15N, 16N, 14N) can be provided on the surfaces of the lateral flanks (15, 16) and of the positioning lug (14) which, when the protective cover (10) is in mounted position on the vehicle, project from the surface of the protective cover which is directed towards the front of the vehicle.

9. A vehicle, in particular a motor vehicle, **characterized in that** it comprises a protective cover (10) of the lower part of its steering column (1) which is in accordance with any one of the preceding claims.
